# EUROPÄISCHE PATENTSCHRIFT

(11) **EP 0 501 146 B1**
(45) Veröffentlichungstag und Bekanntmachung des Hinweises auf die Patenterteilung: **14.12.1994**
(21) Anmeldenummer: 92101296.9
(22) Anmeldetag: 27.01.1992
(51) Int. Cl.: B01D 45/04, B01D 45/08, B01J 19/32, B01D 45/12

(54) **Tropfenabscheider mit Wabenstruktur**
Droplet separator having a honeycomb structure
Séparateur de gouttes ayant la structure d'un nid d'abeilles

(30) Priorität: 28.01.1991 HU 28791
(43) Veröffentlichungstag der Anmeldung: 02.09.1992
(73) Patentinhaber: VEIKI Villamosenergiaipari Kutato Intézet Részvénytársaság, H-1051 Budapest V (HU); Energiagazdálkodási Részvénytársaság, H-1027 Budapest II (HU); Greiner-Pannonplast Csomagoloeszköz Kft., H-9700 Szombathely (HU)
(72) Erfinder: Gösi, Péter, Dr. Dipl.-Ing., H-1025 Budapest (HU); Vörös, Lajos, Dr. Dipl.-Ing., H-1068 Budapest (HU); Kostka, Pál, Dipl.-Ing., H-1024 Budapest (HU); Bergmann, György, Dipl.-Ing., H-1133 Budapest (HU); Csák, Péter, Dipl.-Ing., H-1214 Budapest (HU); Homola, Tamás, Dipl.-Ing., H-1142 Budapest (HU); Kupi, Kálmán, Dipl.-Ing., H-9700 Szombathely (HU); Somogyi, Zoltán, Dipl.-Ing., H-9700 Szombathely (HU)
(74) Vertreter: Viering, Jentschura & Partner

(56) Entgegenhaltungen:
- EP-A- 0 361 225
- BE-A- 859 708
- FR-A- 2 203 671

## Beschreibung

Die Erfindung betrifft einen Tropfenabscheider mit Wabenstruktur zum Abscheiden von durch strömendes Gas mitgerissenen Flüssigkeitstropfen, insbesondere für lufttechnische Anlagen, Kühltürme usw.

Die drei bekanntesten Arten der nach mechanischem Prinzip arbeitenden Tropfenabscheider bilden eine Netzstruktur, eine Lamellenstruktur und eine Wabenstruktur aufweisenden Tropfenabscheider. Die wichtigsten an derartige Tropfenabscheider gestellten Anforderungen sind die folgenden:
- guter Abscheidewirkungsgrad
- geringer Strömungswiderstand
- adäquate Formbeständigkeit und Festigkeit
- geringe Masse
- einfache Einbaubarkeit, auch im Falle von gegliederten Grundflächen
- niedrige Herstellungskosten.

Die Tropfenabscheider mit Netzstruktur gelangen bei Kühltürmen nicht zum Einsatz, da mit ihrer Hilfe die geforderte Abscheidungseffektivität bei noch akzeptierbaren Strömungswiderständen nur bei sehr geringen Geschwindigkeiten erreicht werden kann.

Die Tropfenabscheider mit Lamellenstruktur sind aus parallel angeordneten, vorwiegend ebenen Platten und/oder Zylindermantelflächen aufweisenden Platten aufgebaut, zwischen denen der hindurchströmende und die Flüssigkeitstropfen enthaltende Gasstrom eine einfache oder mehrfache Richtungsänderung d.h. Ablenkung erleidet, so daß infolge der Trägheitskräfte ein bedeutender Teil der im Gasstrom enthaltenen Tropfen auf den Platten abgeschieden wird. Die sich an den Platten ansammelnde Flüssigkeit gelangt in Form von derartigen größeren Tropfen in den vor dem Tropfenabscheider befindlichen Raum zurück, die durch den Gasstrom bereits nicht mehr mitgerissen werden können. Der Gasstrom strömt demgemäß durch derartige Kanäle bei diesen Tropfenabscheidern, deren Breite mit dem freien Abstand zwischen den Lamellen, und deren Länge mit der Länge der Lamellen übereinstimmt.

Die bei den nassen Kühltürmen früher verbreiteten - aus Holz gefertigten - mit Lamellen ausgerüsteten Tropfenabscheider wurden heutzutage bereits insbesondere durch Kunststoffkonstruktionen abgelöst, wobei jedoch bei kleinen Kühltürmen auch Metallkonstruktionen zum Einsatz gelangen. Die Kunststofflamellen werden im allgemeinen durch Strangpressen (Extrudieren), seltener durch Vakuumform- oder Spritzgußverfahren hergestellt und mit Beilagen, Stäben, Schrauben oder auf sonstige Weise - z.B. in eine starre Rahmenkonstruktion eingesetzt - in Blöcke zusammengefaßt. Zur weitere Herabsetzung der Tropfenaustragung - und fallweise zur Versteifung der Platten - wird beim Gasstromaustritt oftmals eine durchgehende Zurückbiegung oder Schulter vorgesehen, die jedoch auch einen wesentlichen Anstieg des Widerstandes verursachen. Um zu verhindern, daß die sich an den Lamellen abscheidenden Wassertropfen bzw. der sich bildende Wasserfilm von dem Gasstrom mitgerissen werden, werden des öfteren nicht nur an der Austrittskante, sondern auch an anderen Stellen der Lamellen in Längsrichtung durchlaufende, vorstehende Schultern und/oder verschiedene tiefe Rippen ausgebildet. Eine derartige Ausführungsform zeigt z.B. die DE-C-3 348 023.

Die Tropfenabscheider mit Wabenstruktur werden durch Aneinanderfügen von dünnen Platten (meistens vakuumgeformten Kunststoffplatten) und deren Zusammenfassen zu Blöcken auf die Weise hergestellt, daß die Konstruktion aus einer Vielzahl schräger und/oder gekrümmter Strömungskanäle gleicher Ausgestaltung besteht. Diese Strömungskanäle haben hier im Gegensatz zum schmalen rechteckigen Querschnitt der Lamellenstruktur aufweisenden Tropfenabscheider einen vieleckigen (viereckigen, jedoch zumeist sechseckigen) Querschnitt, wobei die beiden Hälften der Kanäle durch an den nebeneinander angeordneten Platten befindliche Erhöhungen bzw. Vertiefungen gebildet werden. Die Symmetrieachse der Kanalquerschnitte liegt demgemäß hier in der Berührungsebene der nebeneinander angeordneten Platten.

Die Vortelle der Tropfenabscheider mit Wabenstruktur gegenüber den mit Lamellensystem ausgeführten sind folgende:
- Da bei den Tropfenabscheidern mit Wabenstruktur die Platten häufig miteinander in Berührung kommen und so z.B. durch Verkleben in geringen Abständen aneinander befestigt sind, können auch dünnere Platten verwendet werden, so daß die so zustandekommende Konstruktion materialsparsamer als bei den Tropfenabscheidern mit Lamellenstruktur ausgeführt werden kann.
- Wegen der geringeren Plattenstärken können die Gasströmungsquerschnitte größer sein, so daß mit den Wabenstruktur aufweisenden Tropfenabscheidern auch bei geringeren Strömungswiderständen gute Abscheidewirkungsgrade erreicht werden können.
- Die in der Wabenstruktur eng angeordneten, zum Gasstrom parallelen Trennwände scheiden die schräg zu dem Gasstrom eintreffenden Flüssigkeitstropfen sofort ab, so daß nicht nur die den Gasstrom ablenkenden Flächen, sondern auch die zu dem Gasstrom parallel stehenden Wände an dem Abscheidungsvorgang teilnehmen.
- Die z.B. durch Verkleben in Blöcke zusammengefaßten Tropfenabscheider mit Wabenstruktur können zum Einbau in beliebige Formen geschnitten (gesägt) werden, ohne daß ihre nachträgliche Befestigung erforderlich werden müßte. Demgegenüber müssen bei Lamellenstrukturen nach deren Zerlegen (Trennen) zusätzlich Stäbe, Beilagen bzw. Abstandshalter eingebaut bzw. zusätzliche Rahmenkonstruktionen angefertigt werden.

Wegen der zahlreichen vorteilhaften Eigenschaften der Tropfenabscheider mit Wabenstruktur wurden auch derartige Lamellenstruktur aufweisende Tropfenabscheider entwickelt, deren Lamellen den Wabenstruktur aufweisenden Abscheidern ähnlich aus dünnen Platten hergestellt werden, wobei die Lamellen durch verhältnismäßig dicht angeordnete, mit den Lamellen zusammen geschlossene Strömungskanäle bildende Abstandshalter zusammengefaßt werden. Eine derartige Ausführungsform beschreibt z.B. die GB-A-1 446 604. Die Funktion der Abstandshalter erfüllen hier die zum Gasstrom parallel verlaufenden Wände. (Im Gegensatz zu den Tropfenabscheidern mit Wabenstruktur, bei denen der Abstand zwischen den einzelnen Platten nicht durch zum Gasstrom parallele Wände, sondern durch die auch die Ablenkung, d.h. die Richtungsänderung des Gasstromes bewirkenden Wände gehalten wird.) Das Zusammenfassen derartiger Konstruktionen in Blöcke zur Sicherung der erforderlichen Festigkeit ist jedoch komplizierter bzw. materialaufwendiger als bei den Abscheidern mit Wabenstruktur. An den Stellen der Flüssigkeitsabscheidung pflegt man übrigens auch diese Lamellenstruktur aufweisenden Konstruktionen mit verschiedenen Verrippungen, Wellenformen und Eintiefungen zu versehen, z.T. um das Mitgerissenwerden der Wassertropfen und des Wasserfilms durch den Gasstrom zu verhindern, z.T. jedoch auch, um die Platten zu versteifen.

Eine der am meisten charakteristischen Ausführungsformen der bekannten Tropfenabscheider mit Wabenstruktur ist in der DE-C-27 38 257 beschrieben. Dieser Tropfenabscheider besteht aus einer Reihe von aneinandergefügten, mit trapezförmigen Wellenbergen und Wellentälern versehenen Platten, wobei die Wellenberge der jeweiligen Platte an den zugeordneten Wellentälern der benachbarten Platte z.B. durch Verkleben befestigt sind und mit diesen einen Sechseckquerschnitt aufweisende Strömungskanäle bilden. Zwischen den einander benachbarten Seitenwänden der Strömungskanäle sind in der Verbindungsebene in der ganzen Länge der Strömungskanäle Flüssigkeitsableitrinnen ausgebildet. Die so ausgebildeten Strömungskanäle verfügen über mindesten einen zur Anströmungsrichtung des eintretenden Gases schräg gestellten, die Strömungsrichtung ändernden Abschnitt, dessen bzw. deren Abscheidefläche im allgemeinen glatt ausgeführt, jedoch ggf. mit verschiedenen Rillen bzw. Wellungen versehen ist.

Ein Nachteil der vorstehenden Ausführungsform, d.h. der wellenförmigen oder rillenförmigen Ausbildung der Abscheidungswandflächen besteht darin, daß sie bei einer nicht wirklich effektiven Tropfenabscheidung eine bedeutende Widerstandserhöhung verursacht, außerdem die Turbulenz entlang der Wandung erhöht, demzufolge die sich in Richtung der abscheidenden Seitenwand bewegenden kleinen Tröpfchen in den Hauptgasstrom zurückgelangen und so die Effektivität der Abscheidung beeinträchtigen können. Ein Teil der Masse der auf die gerillte, gewellte Fläche prallenden Tropfen wird leichter reflektiert, als wenn der Aufprall in einem sich an der ebenen glatten Oberfläche bildenden Flüssigkeitsfilm erfolgen würde. Ein weiterer Nachteil dieser Ausführungsform besteht darin, daß sich bei der Formgestaltung der zufolge der gerillten Fläche eine mehrfache Richtungsablenkung gewährleistenden Platten eine Unterschneidung oder Selbstsperrung ergibt, so daß derartige Bauelemente nicht einstückig hergestellt werden können.

Die durch die Erfindung zu lösende Aufgabe ist die Schaffung eines derartigen Tropfenabscheiders, mit dessen Hilfe bei geringem Druckabfall bzw. Strömungswiderstand ein sehr guter Abscheidegrad erreicht werden kann, wobei die Konstruktion einfach ist und mit niedrigen Kosten hergestellt werden kann.

Grundlage der Erfindung ist die Erkenntnis, daß der beste Abscheidewirkungsgrad mittels eines derartigen dünnwandigen Tropfenabscheiders mit Wabenstruktur erzielt werden kann, der solche spezielle Flüssigkeitsableitmulden und sich an diese Mulden anschließende Flüssigkeitsableitrinnen aufweist, die praktisch keinen zusätzlichen Widerstand in den Strömungskanälen verursachen und andererseits die an die Wandungen abgeschiedenen, durch den Gasstrom mitgerissenen Flüssigkeitstropfen bzw. Flüssigkeitsfilme effektiv ansammeln und vor den Tropfenabscheider zurückleiten. Die gestellte Aufgabe wird, von dem vorstehend beschriebenen Tropfenabscheider mit Wabenstruktur ausgehend, erfindungsgemäß dadurch gelöst, daß an der die Flüssigkeitstropfen durch Aufprallen auffangenden, abscheidenden Seite der Seitenwände der Strömungskanäle quer zur Flüssigkeitsabbleitrinne angeschlossene, einen sich in Richtung der Rinne erweiternden Querschnitt und eine sacht nach unten abfallende Mittellinie aufweisende Flüssigkeitsableitmulden ausgebildet sind, deren unterer Rand als sanfte Krümmung ausgebildet ist, wohingegen ihr oberer Rand als ein das weitere Mitgerissenwerden der in die Mulde gelangenden Flüssigkeitstropfen verhindernder steiler Vorsprung ausgebildet ist, wobei diese Mulden an der Rückseite der Seitenwände geringe Strömungswiderstände darstellende Wölbungen bilden.

Infolge der erfindungsgemäßen Ausgestaltung werden an der abscheidenden Seite die abgeschiedenen Tropfen bzw. der sich aus ihnen bildende Flüssigkeitsfilm von dem Gasstrom mit einer minimalen Richtungsablenkung in die sich an die Flüssigkeitsableitrinne anschließenden Flüssigkeitsableitmulden getrieben, so daß dort keine Turbulenz- oder Abrißströmungen wie bei den scharfeckigen Eintiefungen der früheren Ausführungsformen auftritt, bei denen die Gasströmung aus dem Flüssigkeitsfilm oder den Flüssigkeitstropfen die kleineren Tröpfchen herauszureißen vermag, was die Abscheidungseffektivität beeinträchtigt. Der obere Rand der Mulden hingegen ist so ausgeführt, daß er ein weiteres Mitgerissenwerden des Flüssigkeitsfilmes bzw. der Flüssigkeitstropfen unbedingt verhindert und die angesammelte Flüssigkeit in der Form von größeren Tropfen zufolge der abfallenden Ausgestaltung der Mulden sicher in die Flüssigkeitsableitrinnen gelangt, aus denen sie dann unten, am Boden des Tropfenabscheiders austritt. Diese Muldenausgestaltung hat gleichzeitig an der Rückseite der Seitenwände, die an der Tropfenabscheidung nicht teilnimmt, derartige geringe Widerstände aufweisende Wölbungen zur Folge, die die Strömung des Gases kaum beeinflussen, so daß bei erhöhter Abscheidungseffektivität keine Erhöhung der Ventilationsleistung erforderlich wird, so daß die Konstruktion energiesparend arbeitet.

Im Sinne der Erfindung ist es zweckmäßig, wenn der obere Rand der Mulden waagerecht, ihr unterer Rand hingegen nach unten abfallend verläuft, da diese Ausgestaltung das leichtere Herausfließen der Flüssigkeit aus der Mulde in die Rinne fördert.

Für eine weitere zweckmäßige Ausführungsform der Erfindung ist es kennzeichnend, daß der untere Rand der Mulden bei kontinuierlicher Verminderung der Muldentiefe bis zur Tiefe der Rinne sanft in den Rand der Flüssigkeitsableitrinne einläuft, wobei der obere Rand der Mulden in eine in der Rinne in Querrichtung verlaufende Eintiefung übergeht.

Der Vorteil dieser Ausgestaltung besteht darin, daß sich die Mulde auch in der Rinne fortsetzt, wodurch die Flüssigkeit auch in der Flüssigkeitsableitrinne nicht nach oben mitgerissen werden kann. Bei dieser Ausführungsform ist es vorteilhaft, wenn an dem unteren Ende des nach unten abfallenden unteren Randes der Mulde eine die Flüssigkeit führende Nase ausgebildet ist, da so ein besser gelenkter Flüssigkeitsaustritt sichergestellt werden kann.

Der Muldenquerschnitt entspricht zweckmäßigerweise entweder einem abgerundeten Dreieck, dessen einer Winkel größer als 90 Grad ist, oder einer Halbtropfenform. Diese Querschnitte sind nämlich zur optimalen Verwirklichung der im Grundgedanken der Erfindung formulierten, d.h. zur effektiven, ihr weiteres Mitreißen verhinderndes Auffangen der Flüssigkeitstropfen und zur Schaffung der dem Gasstrom gegenüber geringen Widerstand leistenden Wölbungen an der Rückseite am besten geeignet.

Im Sinne einer weiteren zweckmäßigen Ausführungsform der Erfindung ist die abscheidende Seite vor der Mulde so geknickt, daß der Ablenkungswinkel im Vergleich zur Strömungsrichtung des eintretenden strömenden Gases größer als der ursprüngliche Ablenkungswinkel vor der Knickstelle ist. Diese Ausgestaltung verstärkt einerseits die Wand des Strömungskanals, andererseits ist an dem Abschnitt mit erhöhter Richtungsablenkung auch die Tropfenabscheidung unmittelbar vor der Flüssigkeitsableitmulde effektiver. Einen weiteren Vorteil bedeutet der Umstand, daß die Gasströmung vor der Mulde geringfügig weggelenkt wird, wodurch die Gefahr weiter vermindert wird, daß der Gasstrom Tropfen aus der Mulde mit sich reißt.

Es ist ebenfalls zweckmäßig, den Tropfenabscheider so auszubilden, daß in der Nähe der Eintrittsstelle und/oder Austrittsstelle des strömenden Gases ein mit der Strömungsrichtung des eintretenden Gases in seiner Richtung übereinstimmender Eintrittsabschnitt und/oder Austrittsabschnitt ausgebildet ist.

Der Vorteil dieser Ausführungsform besteht darin, daß dadurch der Strömungswiderstand vermindert wird, da bei dem Ein- und Austritt keine Richtungsablenkung vorliegt.

Für eine recht vorteilhafte Ausführungsvariante der Erfindung ist es kennzeichnend, daß die Strömungskanäle mit übereinander angeordneten, von der Strömungsrrichtung des eintretenden Gases in zwei entgegengesetzten Richtungen schräg abweichenden Richtungsablenkabschnitten, und zwar einem unteren Richtungsablenkabschnitt und einem oberen Richtungsablenkabschnitt ausgebildet sind.

Diese Ausgestaltung erhöht einerseits die Effektivität des Tropfenabscheiders und verhindert gleichzeitig das Durchdringen der Sonnenstrahlung durch die Konstruktion, wodurch der Algenbefall an dem unter dem Tropfenabscheider angeordneten mit Wasser berieselten Kühlturmeinsätzen verhindert oder wesentlich vermindert werden kann, der die Arbeitsweise des Systems beeinträchtigt und z.B. Verstopfungen verursachen kann. Bei dieser Ausführungsform ist es zweckmäßig, wenn das Gefälle der Mulden an dem unteren und dem oberen Richtungsablenkabschnitt in einander entgegengesetzter Richtung verläuft. Dadurch fließt nicht nur die Flüssigkeit leichter in die Flüssigkeitsableitrinnen, sondern so kann bei der Fertigung auch ein leichtes Herausheben der geformten Platte aus dem Werkzeug sichergestellt werden. So ergibt sich eine Selbstsperrung oder Unterschneidung nicht einmal in dem Falle, wenn die Mulden z.B. den Querschnitt eines stumpfwinkeligen Dreiecks aufweisen. Ebenfalls ist es zweckmäßig bei dieser Ausführungsform, wenn an dem die größere Tropfenbelastung aufweisenden unteren Richtungsablenkabschnitt mehr und/oder einen größeren Querschnitt aufweisende Mulden vorgesehen sind als an dem oberen Richtungsablenkabschnitt.

Im Falle solch einer Ausführungsform sammelt sich in jeder Mulde nur so viel Flüssigkeit an, die eine optimale Arbeitsweise der Vorrichtung noch nicht behindert.

Zweckmäßig ist es weiterhin bei dieser Ausführungsform, wenn der Ablenkungswinkel des die größere Tropfenbelastung aufweisenden unteren Richtungsablenkabschnittes im Vergleich zur Strömungsrichtung des eintretenden Gases kleiner als der Ablenkungswinkel des oberen Richtungsablenkabschnittes ist. Der Sinn dieser Ausgestaltung besteht darin, daß zur Abscheidung der größeren Tropfen auch eine geringere Richtungsablenkung ausreicht und da die Richtungsablenkung den Widerstand erhöht, ist zweckmäßigerweise nur eine gerade erforderliche Richtungsablenkung vorzusehen.

Im Interesse der leichteren Herstellbarkeit und besseren Montierbarkeit des Tropfenabscheiders ist es zweckmäbig, wenn die die Strömungskanäle bildenden Platten in an sich bekannter Weise zu Blöcken vereint sind, in denen an den Seitenwänden der Strömungskanäle die Mulden aus dem Material der Platten ausgeformt sind, wobei die Flüssigkeitsableitrinnen durch Abrunden und/oder Abkanten der vieleckigen Wellenberge und Wellentäler der sich aneinander anschließenden Platten ausgebildet sind. Im Interesse der größeren Stabilität ist es vorteilhaft, wenn bei dieser Ausführungsform in die Blöcke in bestimmten Abständen, z.B. je Meter 2-5 Versteifungsplatten eingebaut sind.

Zur Montage des Tropfenabscheiders an den Wasser-Verteilerrohren von Kühltürmen ist es vorteilhaft, wenn die Verstärkungsplatte größer als die übrigen, den Block bildenden Platten bemessen ist und in einer aus der unteren Ebene des Blockes nach unten hervorstehenden Weise an den Block befestigt ist, wobei an den Enden der Verstärkungsplatte die Auflage des Blockes auf den Wasserverteilerrohren und die Fixierung seiner Lage fördernde bogenförmige Ausschnitte vorgesehen sind. Dank dieser Ausgestaltung ist keine besondere Stützkonstruktion erforderlich, da die Abstützung durch die Wasserverteilerrohre selbst sichergestellt wird. Andererseits entstehen auf diese Weise auch bei dem Anschluß der Blöcke keine derartigen Spalte, durch die die Tropfen unter Umgehung des Tropfenabscheiders aus der Vorrichtung austreten könnten.

Gegebenenfalls kann es bei dieser Ausführungsform zweckmäßig sein, wenn den Blöcken zu ihrer Lagesicherung beitragende und die Spalte zwischen den Blöcken abschließende Beschwerungsgewichte zugeordnet sind.

Bei sehr geringe Massen aufweisenden, dünnwandigen Tropfenabscheidern kann auch eine besondere Lagesicherung, Befestigung der Blöcke erforderlich sein. Dies kann am zweckmäßigsten mit derartigen Beschwerungsgewichten gelöst werden, die auch die eventuell doch entstehenden schmalen Spalte abdecken und dadurch die Wirksamkeit der Abscheidung weiter verbessern. Die Beschwerungsgewichte sind auch sonst zweckmäßigerweise über den Rohren anzuordnen, und zwar nicht nur aus statischen Gründen, sondern auch deshalb, damit sie den Strömungswiderstand in nur minimalem Ausmaße erhöhen.

Vorstellbar ist auch eine derartige Ausgestaltung des an die Wasserverteillerrohre von Kühltürmen montierbaren Tropfenabscheiders, bei dem die an den Rand der Blöcke befestigten Endplatten größer als die übrigen, den Block bildenden Platten bemessen sind und auf der oberen Ebene des Blockes nach oben hervorstehend an dem Block befestigt sind, wobei der vorstehende Teil der Endplatten in einer zum Abschließen des beim Einbau zwischen die Wasserverteilerrohre entstehenden Spaltes geeigneten Weise zurückgebogen ist.

Bei dieser Ausführungsform ist der Tropfenabscheider eigentlich nicht auf die Wasserverteilerrohre, sondern zwischen die Rohre aufgesetzt. Zum Abschließen des Spaltes zwischen den Tropfenabscheiderblöcken und den Rohren dienen die Zurückbiegungen. Diese Ausführungsform ist in dem Falle vorteilhaft, wenn auf die Wasserverteilerrohre aus irgendeinem Grunde (z.B. aus Festigkeitsgründen) die Tropfenabscheiderblöcke zweckmäßigerweise nicht unmittelbar aufgesetzt werden sollten.

Schließlich kann im Sinne der Erfindung der Tropfenabscheider zur Montage an die Wasserverteilerrohre auch so ausgebildet werden, daß an den Blockrändern die Auflage und die Fixierung der Lage des Blockes auf den Wasserverteilerrohren fördernde Aussparungen vorgesehen sind. Soweit Festigkeitsgesichtspunkte die Verwendung von aus der unteren Ebene der Blöcke nach unten vorstehenden Verstärkungsplatten nicht erfordern, stellt diese Ausführungsform bei den auf Wasserverteilungsrohre aufgesetzten Tropfenabscheidern eine materialsparendere Ausführungsform dar.

Die Erfindung wird ausführlicher anhand von Ausführungsbeispielen, unter Bezugnahme auf die Zeichnung erläutert.

In der Zeichnung zeigen:
Fig. 1 eine axonometrische Ansicht eines Details eines erfindungsgemäßen Tropfenabscheiders mit Wabenstruktur,
Fig. 2 einen Längsschnitt eines erfindungsgemäßen, über zwei Richtungsablenkabschnitte verfügenden Tropfenabscheiders im Schnitt nach der Linie B-B in Fig. 3,
Fig. 3 einen Querschnitt des Tropfenabscheiders in Fig. 2 nach der Linie A-A,
Fig. 4 eine mögliche Anschlußweise einer Flüssigkeitsableitrinne und einer Flüssigkeitsableitmulde, vergrößert,
Fig. 5 a-c verschiedene mögliche Ausführungsformen der Flüssigkeitsableitmulde in axonometrischer Darstellung,
Fig. 6 eine axonometrische Darstellung eines mit einer Verstärkungsplatte versehenen, über zwei Richtungsablenkabschnitte verfügenden, zu einem Block zusammengefaßten Tropfabscheiders,
Fig. 7 einen Schnitt entlang der Linie A-A in Fig. 2, jedoch mit von den in Fig. 3 dargestellten abweichende Ausführung aufweisenden Flüssigkeitsableitrinnen,
Fig. 8 einen auf die Wasserverteilerrohre eines Kühlturmes aufgesetzten erfindungsgemäßen Tropfenabscheider, teilweise in Vorderansicht, teilweise im Schnitt,
Fig. 9 einen Querschnitt entlang der Linie C-C in Fig. 8,
Fig. 10 eine andere Ausführungsvariante eines auf Wasservereteilerrohre aufgesetzten erfindungsgemäßen Tropfenabscheiders mit nach oben vorstehenden zurückgebogenen Endplatten, und
Fig. 11 eine weitere Ausführungsvariante eines auf Wasserverteilerrohre aufgesetzten erfindungsgemäßen Tropfenabscheiders mit bei den Wasserverteilerrohren im Block ausgebildeten Aussparungen.

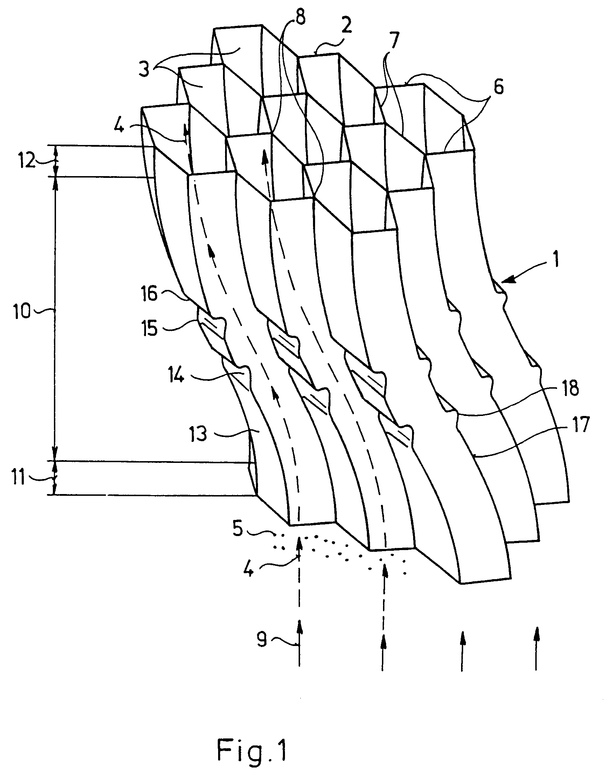

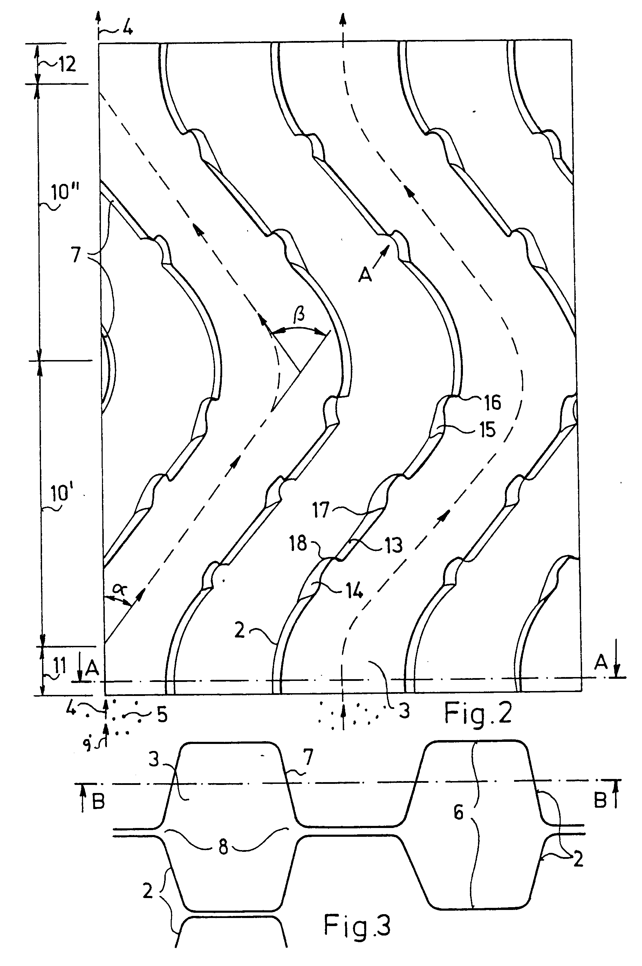

Der in Fig. 1 dargestellte, eine Wabenstruktur aufweisende erfindungsgemäße Tropfenabscheider 1 besteht aus einer Reihe von aneinandergefügten, in an sich bekannter Weise mit vieleckigen, ggf. trapezförmigen Wellenbergen und Wellentälern versehenen Platten 2, wobei die Wellenberge der jeweiligen Platte 2 auf die in Fig. 3 besonders gut ersichtliche Weise an den symmetrisch zugeordneten Wellentälern der benachbarten Platte 2 z.B. durch Verkleben befestigt sind und mit diesen einen Vieleckquerschnitt, ggf. Sechseckquerschnitt aufweisende Strömungskanäle 3 bilden, in denen die durch das strömende Gas 4 mitgerissenen Flüssigkeitstropfen 5 zur Abscheidung gelangen. Jeder Strömungskanal 3 wird durch zueinander parallele ebene Wände 6 sowie diese verbindende, als räumliche Flächen ausgebildeten Seitenwände 7 begrenzt, wobei zwischen den nebeneinander verlaufenden Seitenwänden 7 in der ganzen Länge des Strömungskanals 3 Flüssigkeitsableitrinnen 8 vorgesehen sind. Die so ausgebildeten Strömungskanäle 3 verfügen über mindestens einen, im Vergleich zur Strömungsrichtung 9 des eintretenden strömenden Gases 4 schräg liegenden (geraden oder gekrümmten) Richtungsablenkabschnitt 10, wobei in der Nähe der Eintrittsstelle und/oder Austrittsstelle des strömenden Gases 4 zweckmäßigerweise ein mit der Strömungsrichtung 9 des eintretenden Gases 4 in seiner Richtung übereinstimmender Eintrittsabschnitt 11 (Anströmabschnitt) und Austrittsabschnitt 12 (Ausströmabschnitt) ausgebildet ist.

Die wesentlichste Neuartige des erfindungsgemäßen Tropfenabscheiders 1 besteht darin, daß an der die Flüssigkeitstropfen 5 durch Aufprallen abscheidenden Seite 13 der Seitenwände 7 quer zur Flüssigkeitsableitrinne 8 verlaufende, in Richtung zur Rinne 8 einen sich verbreitenden Querschnitt und eine sacht nach unten zu abfallende Mittellinie aufweisende flüssigkeitsableitende Mulden 14 ausgebildet sind. Der untere Rand 15 dieser Mulden 14 ist als eine sanfte Krümmung ausgebildet, wohingegen der obere Rand 16 als ein das weitere Mitreißen der in die Mulde 14 gelangenden Flüssigkeitstropfen 5 oder des Flüssigkeitsfilms verhindernder steiler Vorsprung ausgebildet ist. Die so ausgebildeten Mulden 14 bilden an der Rückseite 17 der Seitenwände 7 einen geringen Strömungswiderstand aufweisende Wölbungen 18.

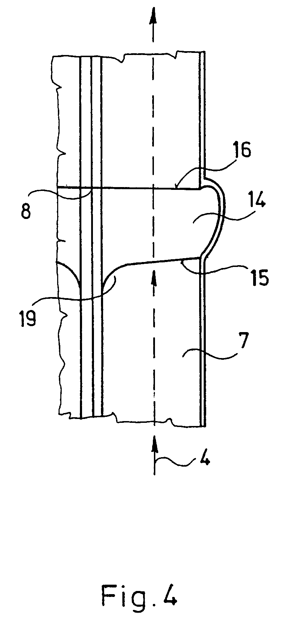

Aus Fig. 4 ist ersichtlich, daß der untere Rand 15 der Mulden 14 bei bis zur Tiefe der Rinne 8 erfolgender kontinuierlicher Verminderung der Muldentiefe sich in den Rand der Flüssigkeitsableitrinne 8 hineinfügt, wobei der obere Rand 16 der Mulden 14 in die in der Rinne 8 in Querrichtung verlaufende Vertiefung übergeht. Aus Fig. 4 ist es weiterhin zu ersehen, daß der obere Rand 16 der Mulde 14 (im wesentlichen einen in senkrechter Richtung eintretenden Gasstrom vorausgesetzt) vorteilhafterweise waagerecht ist, wogegen ihr unterer Rand 15 ein Gefälle nach unten zu aufweist und an ihrem unteren Ende zweckmäßigerweise eine Flüssigkeit führende Nase 19 ausgebildet ist.

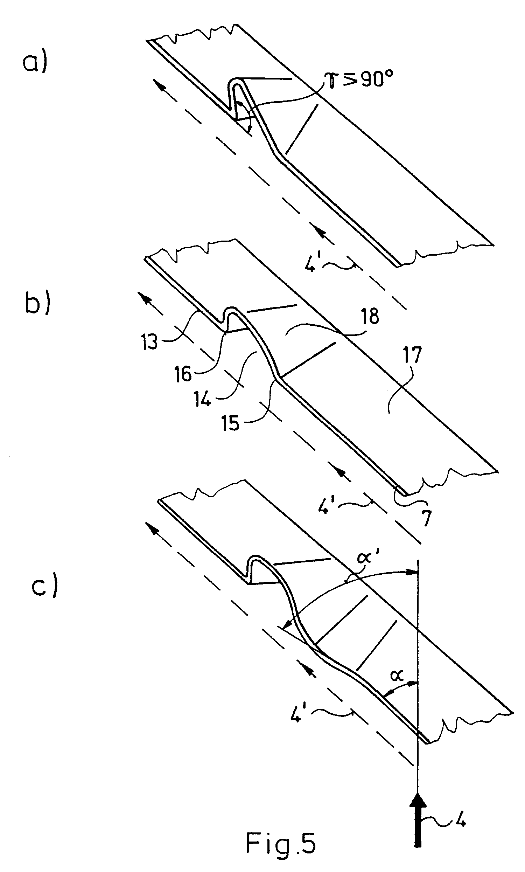

Aus den Figuren. 5 a-c geht hervor, daß der Querschnitt der Mulden 14 vorzugsweise entweder ein derartiges abgerundetes Dreieck darstellt, dessen einer Winkel γ größer als 90 Grad ist oder eine halbe Tropfenform aufweist, wie dies in Fig. 5a bzw. 5b zu sehen ist. In 5c ist eine derartige vorteilhafte Ausführungsvariante dargestellt, wo vor der Mulde 14 die abscheidende Seite 13 so geknickt ist, daß der Ablenkungswinkel α' im Vergleich zur Strömungsrichtung 9 des eintretenden strömenden Gases 4 größer ist als der vor der Knickstelle bestehende ursprüngliche Ablenkungswinkel α zwischen dem eintretenden strömenden Gas 4 und dem im Richtungsablenkabschnitt 10 sich bewegenden strömenden Gas 4'.

Fig. 2 zeigt eine derartige günstige Ausführungsform des erfindungsgemäßen Tropfenabscheiders, bei der die Strömungskanäle 3 mit übereinander angeordneten, von der Strömungsrichtung 9 des eintretenden strömenden Gases 4 in zwei verschiedenen (entgegengesetzten) Richtungen schräg abweichenden Richtungsablenkabschnitten, nämlich einem unteren Richtungsablenkabschnitt 10' und einem oberen Richtungsablenkabschnitt 10'' versehen sind. Die Neigung der Mulden 14 ist bei dem unteren Richtungsablenkabschnitt 10' und dem oberen Richtungsablenkabschnitt 10'' einander entgegengesetzt. Aus Fig. 2 geht deutlich hervor, daß an dem unteren, eine größere Tropfenbelastung aufweisenden Richtungsablenkabschnitt 10' mehrere und größere Querschnitte aufweisende Mulden 14 als an dem oberen Richtungsablenkabschnitt 10'' vorgesehen sind. Aus Fig. 2 geht weiterhin auch hervor, daß der Ablenkungswinkel α des die größere Tropfenbelastung aufweisenden unteren Richtungsablenkabschnittes 10' im Vergleich zur Strömungsrichtung 9 des eintretenden Gases 4 kleiner als der Ablenkungswinkel β des oberen Richtungsablenkabschnittes 10'' ist.

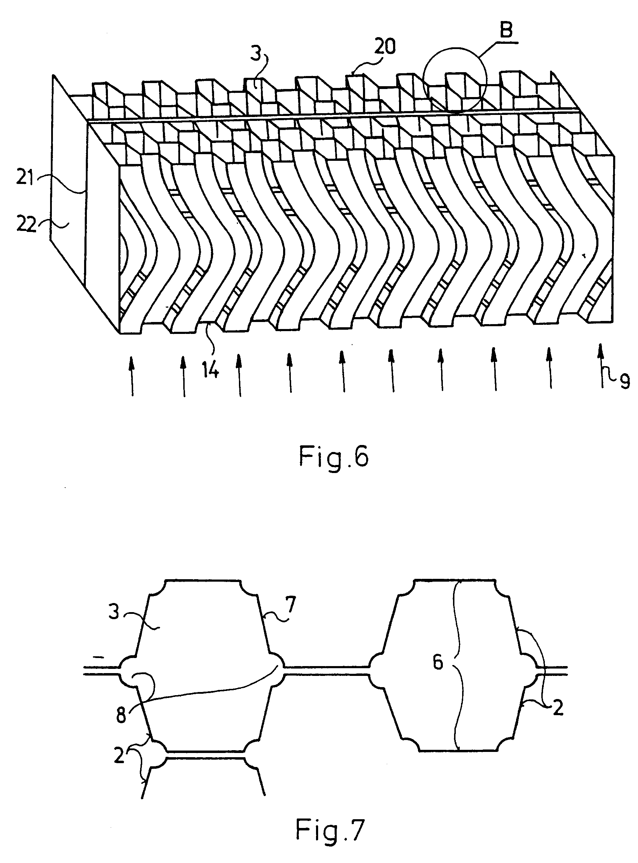

Aus Fig. 6 ist gut zu ersehen, daß die die Strömungskanäle 3 des erfindungsgemäßen Wabenstruktur aufweisenden Tropfenabscheiders bildenden, z.B. durch Warmverformung hergestellten Platten 2 in an sich bekannter Weise z.B. durch Verkleben zu Blöcken 20 vereint sind, in denen an den Seitenwänden 7 der Strömungskanäle 3 die Mulden 14 aus dem Werkstoff der Platten 2 ausgebildet sind. Hier kann es zweckmäßig sein, daß die Flüssigkeitsableitrinnen 8 auf die in Fig. 7 sichtbare Weise durch Abrunden, evtl. Abkanten der vieleckigen, z.B. trapezförmigen Wellenberge und Wellentäler der sich aneinander anschließenden Platten 2 ausgebildet sind. Die erforderliche Steifigkeit der Konstruktion der Blöcke 20 wird durch in bestimmten Abständen eingebaute Verstärkungsplatten 21 sichergestellt. In die Blöcke 20 sind zweckmäßigerweise je Meter 2 - 5 Verstärkunsgplatten 21 eingebaut. Das Ende der Blöcke 20 wird zweckmäßigerweise von zu den Verstärkungsplatten 21 senkrecht angeordnete Endplatten 22 begrenzt.

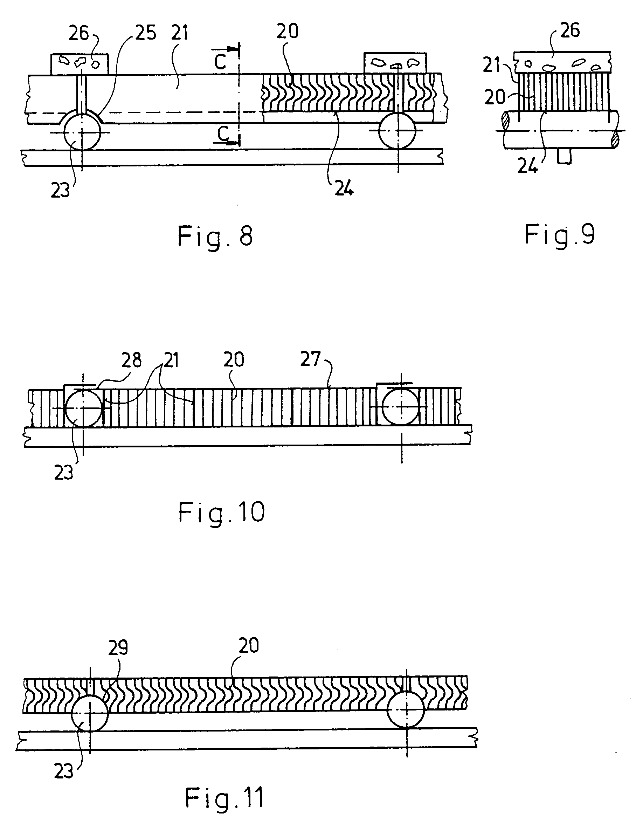

Der erfindungsgemäße Tropfenabscheider gelangt meistens in Kühltürmen zum Einsatz und er wird an deren Wasserverteilerrohre 23 montiert bzw. auf diese aufgesetzt. Eine mögliche Verwirklichungsweise ist in den Fig. 8 und 9 dargestellt, wo die Verstärkungsplatte 21 größer als die übrigen, den Block 20 bildenden Platten 2 bemessen und aus der unteren Ebene 24 des Blockes 20 nach unten vorstehend auf den Block 20 aufgesetzt ist. An den unteren Enden der Verstärkungsplatte 21 sind bogenförmige Ausschnitte 25 vorgesehen, die die Auflage und die Fixierung des Blockes 20 an den Wasserverteilerrohren 23 des Kühlturmes sicherstellen. Zum Abschließen der zwischen den Blöcken 20 bestehenden Spalte sind über diesen Beschwerungsgewichte 26 auf die Blöcke 20 aufgesetzt.

Eine andere mögliche Variante der Montage des Tropfenabscheiders an den Wasserverteilerrohren 23 ist in Fig. 10 dargestellt. Hier sind die an dem Rand der Blöcke 20 befestigten Endplatten 22 größer als die übrigen, den Block 20 bildenden Platten 2 bemessen und aus der oberen Ebene 27 des Blockes 20 nach oben vorstehend an dem Block 20 befestigt. Die vorstehenden Teile 28 der Endplatten 22 sind in einer zum Abschließen des beim Einbau zwischen die Wasserverteilerrohre 23 entstehenden Spaltes geeigneten Weise, im wesentlichen waagerecht zurückgebogen.

Schließlich ist in Fig. 11 eine derartige Montagevariante des erfindungsgemäßen Tropfenabscheiders zu sehen, bei der an den Rändern des Blockes 20 im Block 20 selbst seine Auflage und Fixierung seiner Anordnung an den Wasserverteilerrohren 23 fördernde Aussparungen 29 ausgebildet sind.

Die Arbeitsweise des erfindungsgemäßen Tropfenabscheiders mit Wabenstruktur ist wie folgt:
Die durch das strömende Gas 4 mitgerissenen Flüssigkeitstropfen 5 treten in der Strömungsrichtung 9 (im Falle der dargestellten Beispiele senkrecht) in die Strömungskanäle 3 des Tropfenabscheiders 1 ein, wo sie dann an deren Richtungsablenkabschnitten 10 bzw. 10' und 10'' an die abscheidende Seite 13 prallen, wo die Flüssigkeitsableitmulden 14 ausgebildet sind. Da der untere Rand 15 der Mulden 14 als sanfte Krümmung ausgebildet ist, treibt die Gasströmung die an die abscheidende Seite 13 gelangenden Flüssigkeitstropfen 5 und den sich aus diesen bildenden Flüssigkeitsfilm (Wasserfilm) mit einer minimalen Ablenkung, ohne das Auslösen von Turbulenz, in die Flüssigkeitsableitmulden 14 hinein. Da gleichzeitig der obere Rand 16 der Mulden 14 als steiler Vorsprung ausgebildet ist, verhindert dieser die weitere Mitnahme des Wasserfilms bzw. der Tropfen. Diese Ausgestaltung der Mulden 14 erscheint an der zur abscheidenden Seite 13 der Seitenwände 7 der Strömungskanäle 3 entgegengesetzten Rückseite 17 als eine einen geringen Strömungswiderstand aufweisende, hauptsächlich halbtropfenförmige Wölbung 18 und der so erreichte geringere Strömungswiderstand stellt die effektive, hierbei jedoch energiesparsame Arbeitsweise des Tropfenabscheiders sicher.

Nach der Ansammlung einer gewissen Wassermenge gelangt das Wasser aus den Flüssigkeitsableitmulden 14 über die Flüssigkeitsableitrinnen 8 in der Form von derart großen Tropfen in den Raum vor dem Tropfenabscheider 1, die durch das strömende Gas 4 nicht mehr mitgerissen werden können.

Die divergierende Ausgestaltung und die einander entgegengesetzte Neigung der Ränder 15 und 16 der Mulden 14 an dem unteren bzw. oberen Richtungsablenkabschnitt 10' und 10'' fördert einerseits, daß Wasser aus den Mulden 14 leichter in die Rinnen 8 herausfließt und gewährleistet andererseits, daß bei der Fertigung die geformte Platte 2 ohne Selbstsperrung und Unterschneidung leicht aus dem Werkzeug herausgehoben werden kann.
a) Bei einer den gleichen Abscheidungswirkungsgrad wie die bekannten Tropfenabscheiderkonstruktionen gewährleistenden Ausführung weist der erfindungsgemäße Tropfenabscheider einen geringeren Strömungswiderstand auf, was einerseits darauf zurückgeführt werden kann, daß dem speziellen Flüssigkeitsableitsystem zufolge zum Erreichen der mit den bekannten Tropfenabscheidern gleichen Abscheidungseffektivität eine geringere Ablenkung des Gasstromes erforderlich ist, so daß die Form der den Gasstrom leitenden Kanäle strömungstechnisch günstiger ausgelegt werden kann, wobei andererseits die erfindungsgemäße Ausgestaltung der Flüssigkeitssammel- und -ableitmulden im Vergleich zu den ebenen muldenlosen Ausführungen nur einen vernachlässigbar geringen Widerstandsanstieg verursacht. All dies ermöglicht letzten Endes die Aufwendung einer geringeren Ventilationsenergie.
b) Der erfindungsgemäße Tropfenabscheider kann auch nach dem Vakuumformverfahren für Kunststoffplatten sogar in einer eine zweifache oder mehrfache Richtungsablenkung verwirklichenden Ausführung hergestellt und in dieser Weise wesentlich einfacher und materialsparsamer produziert werden als die mit Wassersammelkanälen versehenen, Lamellenstruktur aufweisenden Troppenabscheider.

## Patentansprüche

1. Tropfenabscheider (1) mit Wabenstruktur zum Abscheiden von durch strömendes Gas mitgerissenen Flüssigkeitstropfen (5), bestehend aus einer Reihe von aneinandergefügten, mit vieleckigen, zweckmäßigerweise mit trapezförmigen Wellenbergen und Wellentälern ausgestalteten Platten (2), wobei die Wellenberge der jeweiligen Platte an den symmetrisch zugeordneten Wellentälern der benachbarten Platte befestigt sind und mit diesen Vieleckquerschnitte, insbesondere Sechseckquerschnitte, aufweisende Strömungskanäle (3) bilden, wobei jeder Strömungskanal von zueinander parallelen ebenen Wänden (6) sowie diese verbindenden, als räumliche Fläche ausgebildeten Seitenwänden (7) begrenzt ist und wobei zwischen den nebeneinander befindlichen Seitenwänden (7) eine in der ganzen Länge des Strömungskanals daran entlanglaufende Flüssigkeitsableitrinne (8) ausgebildet ist, außerdem die so ausgebildeten Strömungskanäle (3) über mindestens einen im Vergleich zur Richtung des eintretenden strömenden Gases schrägen Richtungsablenkabschnitt (10) verfügen, dadurch gekennzeichnet, daß an der die Flüssigkeitstropfen (5) durch Aufprallen auffangenden abscheidenden Seite (13) der Seitenwände (7) an die Flüssigkeitsableitrinne (8) in Querrichtung angeschlossene, in Richtung der Rinne (8) einen sich erweiternden Querschnitt und eine sacht nach unten hin abfallende Mittellinie aufweisende Flüssigkeitsableitmulden (14) ausgebildet sind, deren unterer Rand (15) als sanfte Krümmung, wogegen ihr oberer Rand (16) als ein das weitere Mitgerissenwerden der in die Mulde (14) gelangenden Flüssigkeitstropfen (5) verhindernder steiler Vorsprung ausgebildet ist, wobei diese Mulden (14) an der Rückseite (17) der Seitenwände (7) geringe Strömungswiderstände darstellende Wölbungen (18) bilden.

2. Tropfenabscheider nach Anspruch 1, dadurch gekennzeichenet, daß der obere Rand (16) der Mulden (14) waagerecht, ihr unterer Rand (15) nach unten abfallend verläuft.

3. Tropfenabscheider nach Anspruch 1, dadurch gekennzeichnet, daß sich der untere Rand (15) der Mulden (14) bei kontinuierlicher Verminderung der Muldentiefe bis zur Tiefe der Rinne (8) in den Rand der Flüssigkeitsableitrinne (8) hineinfügt, wobei der obere Rand (16) der Mulden (14) in eine der Rinne (8) in Querrichtung verlaufende Eintiefung übergeht.

4. Tropfenabscheider nach Anspruch 3, dadurch gekennzeichnet, daß am unteren Ende des nach unten zu abfallenden unteren Randes (15) der Mulde (14) eine die Flüssigkeit führende Nase (19) vorgesehen ist.

5. Tropfenabscheider nach einem der Anspruche 1 bis 4, dadurch gekennzeichnet, daß der Querschnitt der Mulde (14) ein derartiges abgerundetes Dreieck darstellt, von dessen Winkeln der eine größer als 90 Grad ist.

6. Tropfenabscheider nach einem der Ansprüche 1 bis 4, dadurch gekennzeichnet, daß der Querschnitt der Mulde (14) die Form eines halben Tropfens aufweist.

7. Tropfenabscheider nach einem der Ansprüche 1 bis 6, dadurch gekennzeichnet, daß vor der Mulde (14) die abscheidende Seite (13) so geknickt ist, daß der Ablenkungswinkel (α') im Vergleich zur Strömungsrichtung (9) des eintretenden strömenden Gases (4) größer als der ursprüngliche Ablenkungswinkel (α) vor der Knickstelle ist.

8. Tropfenabscheider nach einem der Ansprüche 1 bis 7, dadurch gekennzeichnet, daß in der Nähe der Eintrittsstelle und/oder Austrittsstelle des strömenden Gases (4) ein eine mit der Strömungsrichtung (9) des eintretenden Gases (4) übereinstimmende Richtung aufweisender Eintrittsabschnitt (11) und/oder Austrittsabschnitt (12) ausgebildet ist.

9. Tropfenabscheider nach einem der Ansprüche 1 bis 8, dadurch gekennzeichnet, daß die Strömungskanäle (3) mit übereinander angeordneten, von der Strömungsrichtung (9) des eintretenden Gases (4) in zwei entgegengesetzten Richtungen schräg abweichenden Richtungsablenkabschnitten, einem unteren Richtungsablenkabschnitt (10') und einem oberen Richtungsablengkabschnitt) (10''), versehen sind.

10. Tropfenabscheider nach Anspruch 9, dadurch gekennzeichnet, daß die Neigungen der Mulden (14) am unteren Richtungsablenkabschnitt (10') und am oberen Richtungsablenkabschnitt (10'') einander entgegengesetzt sind.

11. Tropfenabscheider nach Anspruch 9 oder 10, dadurch gekennzeichnet, daß an dem die größere Tropfenbelastung aufweisenden unteren Richtungsablenkabschnitt (10') mehr und/oder einen größeren Querschnitt aufweisende Mulden (14) als an dem oberen Richtungsablenkabschnitt (10'') ausgebildet ist.

12. Tropfenabscheider nach einem der Ansprüche 9 bis 11, dadurch gekennzeichnet, daß der Ablenkungswinkel (α) des die größere Tropfenbelastung aufweisenden unteren Richtungsablenkabschnittes (10') im Vergleich zur Strömungsrichtung (9) des eintretenden Gases (4) kleiner als der Ablenkungswinkel (β) des oberen Richtungsablenkabschnittes (10'') ist.

13. Tropfenabscheider nach einem der Ansprüche 1 bis 12, dadurch gekennzeichnet, daß die die Strömungskanäle (3) bildenden Platten (2) in an sich bekannter Weise zu Blöcken (20) vereint sind, in denen an den Seitenwänden (7) der Strömungskanäle (3) die Mulden (14) aus dem Material der Platten (2) ausgeformt sind, wobei die Flüssigkeitsableitrinnen (8) durch Abrunden und/oder Abkanten der vieleckförmigen Wellenberge und Wellentäler der sich aneinander anschließenden Platten (2) ausgebildet sind.

14. Tropfenabscheider nach Anspruch 13, dadurch gekennzeichnet, daß in die Blöcke (20) in bestimmten Abständen die Steifigkeit der Konstruktion gewährleistende Verstärkungsplatten (21) eingebaut sind.

15. Tropfenabscheider nach Anspruch 14, dadurch gekennzeichnet, daß in die Blöcke (20) je Meter 2-5 Verstärkungsplatten (21) eingebaut sind.

16. Tropfenabscheider nach Anspruch 14 oder 15, dadurch gekennzeichnet, daß die Verstärkungsplatte (21) größer als die übrigen, den Block (20) bildenden Platten (2) bemessen ist und aus der unteren Ebene (24) des Blockes (20) nach unten vorstehend an dem Block (20) befestigt ist, wobei an den Enden der Verstärkungsplatte (21) die Auflage des Blockes (20) auf den Wasserverteilerrohren (23) und die Fixierung seiner Lage fördernde bogenförmige Ausschnitte (25) ausgebildet sind.

17. Tropfenabscheider nach Anspruch 16, dadurch gekennzeichnet, daß den Blöcken (20) zu deren Lagesicherung beitragende und die Spalte zwischen den Blöcken (20) abschließende Beschwerungsgewichte (26) zugeordnet sind.

18. Tropfenabscheider nach Anspruch 14 oder 15, dadurch gekennzeichnet, daß die an dem Rand der Blöcke (20) befestigten Endplatten (22) größer als die übrigen, den Block (20) bildenden Platten (2) bemessen und aus der oberen Ebene (27) des Blockes (20) nach oben vorstehend an dem Block (20) befestigt sind, wobei der vorstehende Teil (28) der Endplatten (22) in einer zum Abschließen des bei dem Einbau zwischen die Wasserverteilerrohre (23) entstehenden Spaltes geeigneten Weise zurückgebogen ist.

19. Tropfenabscheider nach Anspruch 14 oder 15, dadurch gekennzeichnet, daß an den Rändern des Blockes (20) die Auflage und die Fixierung der Lage des Blockes (20) auf den Wasserverteilerrohren (23) fördernde Aussparungen (29) ausgebildet sind.

## Claims

1. A droplet separator (1) having a honeycomb structure for separating liquid droplets (5) entrained by a flowing gas (4), consisting of a number of plates (2) fitted together and formed with polygonal, preferably trapezoidal, wave crests and wave troughs, the wave crests of each plate being fixed to the symmetrically associated wave troughs of the adjoining plate to jointly define flow conduits (3) having polygonal, in particular hexagonal, cross sections, each flow conduit (3) being confined by walls (6) paralleling each other and by side walls (7) constituting a spatial surface connecting the parallel walls (6), a liquid-draining groove (8) being defined between the juxtaposed side walls (7) and extending along the whole length thereof; the flow conduits (3) thus defined comprising at least one direction-deflecting portion (10) oblique with respect to the flow direction (9) of the entering gas (4), characterised in that liquid-draining pits (14) are formed on the separating side (13) of the side walls (7) catching the liquid droplets (5) by impingement, that the liquid-draining pits (14) are transversely connected to the liquid-draining groove (8), that their cross-sections expand towards the groove (8) and their centre lines are gently descending, the lower rim (15) of each pit (14) constituting a soft curvature, whereas the upper rim (16) of each pit (14) constitutes a steep projection preventing further entrainment of the liquid droplets (5) passing into the pit (14), said pits (14) forming bulges (18) presenting low flow resistance on the rear sides (17) of the side walls (7).

2. The droplet separator according to claim 1, characterised in that the upper rim (16) of each pit (14) extends horizontally, while the lower rim (15) of each pit (14) descends.

3. The droplet separator according to claim 1, characterised in that the lower rim (15) of each pit (14) fits into the edge of the liquid-draining groove (8), while the depth of the pit is continuously shrinking to the depth of the groove (8), the upper rim (16) of each pit verging to a recess extending transversely to the groove (8).

4. The droplet separator according to claim 3, characterised in that a liquid-guiding nose (19) is provided at the lower end of the descending lower rim (15) of pit (14).

5. The droplet separator according to any one of claims 1 to 4, characterised in that the cross-section of each pit (14) defines a rounded triangle having one angle greater than 90 degrees.

6. The droplet separator according to any one of claims 1 to 4, characterised in that the cross-section of each pit (14) is in the form of a half-drop.

7. The droplet separator according to any one of claims 1 to 6, characterised in that the separating side (13) is bent upstream of the pit (14) such that the angle of deflection (α') with respect to the flow direction (9) of the entering flow of gas (4) is greater than the initial angle of deflection (α) upstream of the bent section.

8. The droplet separator according to any one of claims 1 to 7, characterised in that an entry portion (11) and/or a discharge portion (12) are arranged adjacent to the place of entry and/or the place of discharge of the flowing gas (4), said portions being arranged in a direction corresponding to the flow direction (9) of the entering gas (4).

9. The droplet separator according to any one of claims 1 to 8, characterised in that the flow conduits (3) comprise direction-deflecting portions - a lower direction-deflecting portion (10') and an upper direction-deflecting portion (10'') -arranged one above the other and deviating obliquely in two opposite directions from the flow direction (9) of the entering gas (4).

10. The droplet separator according to claim 9, characterised in that the inclinations of the pits (14) are opposite to each other in the lower and upper direction-deflecting portions (10', 10''), respectively.

11. The droplet separator according to claim 9 or 10, characterised in that the lower direction-deflecting portion (10'), which has to catch more droplets than the upper direction-deflecting portion (10''), comprises more pits (14) and/or pits (14) having a larger cross-section than the upper direction-deflecting portion (10'').

12. The droplet separator according to any one of claims 9 to 11, characterised in that the angle of deflection (α) of the lower direction-deflecting portion (10'), which has to catch more droplets than the upper direction-deflecting portion (10''), is smaller with respect to the flow direction (9) of the entering gas (4) than the angle of deflection (β) of the upper direction-deflecting portion (10'').

13. The droplet separator according to any one of claims 1 to 12, characterised in that the plates (2) defining the flow conduits (3) are assembled in the form of blocks (20), in a manner known as such, the pits (14) being formed from the material of the plates (2) on the side walls (7) of the flow conduits (3), and the liquid-draining grooves (8) being formed by rounding and/or bending of the polygonal wave crests and wave troughs of the plates (2) adjoining each other.

14. The droplet separator according to claim 13, characterised in that reinforcement plates (21) are built into the blocks (20) at predetermined intervals to ensure the rigidity of the structure.

15. The droplet separator according to claim 14, characterised in that two to five reinforcement plates (21) per meter are built into the blocks (20).

16. The droplet separator according to claim 14 or 15, characterised in that the size of the reinforcement plate (21) is greater than that of the other plates (2) forming the block (20), the reinforcement plate (21) being mounted to the block (20) such as to project downwardly from the lower plane (24) of block (20), with arcuate notches (25) being formed at the ends of reinforcement plate (21) to support the block (20) on the water distributing pipes (23) and to fix its position.

17. The droplet separator according to claim 16, characterised in that loading weights (26) are associated with the blocks (20) to assist in fixing the positions thereof, and to close the gap between them.

18. The droplet separator according to claim 14 or 15, characterised in that the end plates (22) mounted on the sides of the blocks (20) are chosen larger than the other plates (2) establishing each block (20) and are mounted to the block (20) such as to project upwardly from the upper plane (27) of block (20), the projecting part (28) of each end plate (22) being bent backwards such as to close the gap caused by the insertion between the water distributing pipes (23).

19. The droplet separator according to claim 14 or 15, characterised in that the rims of block (20) comprise recesses (29) for supporting the block (20) and fixing its position on the water distributing pipes (23).

## Revendications

1. Séparateur de gouttes (1) ayant la structure d'un nid d'abeilles, pour séparer des gouttelettes de liquide (5) entraînées par un courant de gaz (4), consistant en une série de plaques (2) rassemblées comprenant des crêtes et des creux d'une onde polygonaux, de préférence trapézoïdaux, les crêtes de chaque plaque étant fixées aux creux de la plaque voisine associés symétriquement pour définir conjointement des conduits de courant (3) polygonaux, notamment hexagonaux, en coupe transversale, chaque conduit de courant (3) étant limité par des parois (6) parallèles l'une à l'autre et par des parois latérales (7) constituant une surface spatiale reliant les parois parallèles (6), un conduit d'écoulement de liquide (8) étant défini entre les parois latérales (7) juxtaposées qui longe toute leur longueur; les conduits de courant (3) ainsi définis comprenant au moins une partie de déflexion de direction (10) oblique par rapport à la direction (9) du courant de gaz (4) entrant, le séparateur étant caractérisé en ce que des auges d'écoulement de liquide (14) sont formées du côté séparateur (13) des parois latérales (7) pour attraper les gouttelettes (5) par leur impact; en ce que les auges d'écoulement de liquide (14) sont transversalement connectées au conduit d'écoulement (8); que les auges (14) s'élargissent en coupe transversale vers le conduit d'écoulement (8) et que la ligne centrale des auges (14) descend doucement, le bord inférieur (15) de chaque auge (14) constituant une courbure légère tandis que le bord supérieur (16) de chaque auge (14) constitue une partie en saillie empêchant l'entraînement des gouttelettes (5) passant dans l'auge (14), lesdites auges (14) formant, du côté arrière (17) des parois latérales (7), des bombements (18) présentant au courant une résistance basse.

2. Séparateur de gouttes selon la revendication 1, caractérisé en ce que le bord supérieur (16) de chaque auge (14) s'étend horizontalement, alors que le bord inférieur (15) de chaque auge (14) descend.

3. Séparateur de gouttes selon la revendication 1, caractérisé en ce que le bord inférieur (15) de chaque auge (14) s'insère au bord du conduit d'écoulement (8), tandis que la profondeur de l'auge se réduit en continu jusqu'à la profondeur du conduit d'écoulement (8), le bord supérieur (16) de chaque auge (14) se confondant avec une encoche disposée transversalement au conduit d'écoulement (8).

4. Séparateur de gouttes selon la revendication 3, caractérisé en ce qu'un nez (19) de guidage de liquide est pourvu à l'extrémité inférieure du bord inférieur (15) descendant de l'auge (14).

5. Séparateur de gouttes selon l'une quelconque des revendications 1 à 4, caractérisé en ce que la coupe transversale de chaque auge (14) définit un triangle arrondi ayant un angle dépassant 90 degrés.

6. Séparateur de gouttes selon l'une quelconque des revendications 1 à 4, caractérisé en ce que la coupe transversale de chaque auge (14) a la forme d'une demi-goutte.

7. Séparateur de gouttes selon l'une quelconque des revendications 1 à 6, caractérisé en ce que le côté séparateur (13) est plié devant l'auge (14) de sorte que l'angle de déflexion (α'), par rapport à la direction (9) du courant de gaz (4) entrant, dépasse l'angle de déflexion initial (α) devant la section pliée.

8. Séparateur de gouttes selon l'une quelconque des revendications 1 à 7, caractérisé en ce qu'une section d'entrée (11) et/ou une section de sortie (12) sont disposées à la proximité de l'endroit d'entrée et/ou à la proximité de l'endroit de sortie du courant de gaz (4), lesdites sections étant orientées dans une direction analogue à celle (9) du courant de gaz (4) entrant.

9. Séparateur de gouttes selon l'une quelconque des revendications 1 à 8, caractérisé en ce que les conduits de courant (3) comprennent des parties de déflexion de direction - une partie inférieure de déflexion de direction (10') et une partie supérieure de déflexion de direction (10'') - situées l'une au-dessus de l'autre et déviant, de manière oblique dans deux directions opposées, de la direction (9) du courant de gaz (4) entrant.

10. Séparateur de gouttes selon la revendication 9, caractérisé en ce que les inclinaisons des auges (14) sont opposées l'une par rapport à l'autre dans les parties inférieure et supérieure de déflexion de direction (10', 10''), respectivement.

11. Séparateur de gouttes selon la revendication 9 ou 10, caractérisé en ce que la partie inférieure de déflexion de direction (10'), qui doit attraper plus de gouttelettes (5) que la partie supérieure de déflexion de direction (10''), comprend plus d'auges (14), et/ou des auges (14) ayant une plus grande coupe transversale, que la partie supérieure de déflexion de direction (10'').

12. Séparateur de gouttes selon l'une quelconque des revendications 9 à 11, caractérisé en ce que l'angle de déflexion (α) de la partie inférieure de déflexion de direction (10'), qui doit attraper plus de gouttelettes (5) que la partie supérieure de déflexion de direction (10''), est plus petit, par rapport à la direction (9) du courant de gaz (4) entrant, que l'angle de déflexion (β) de la partie supérieure de déflexion de direction (10'').

13. Séparateur de gouttes selon l'une quelconque des revendications 1 à 12, caractérisé en ce que les plaques (2) définissant les conduits de courant (3) sont réunies sous forme de blocs (20), de façon connue en tant que telle, les auges (14) étant formées du matériel des plaques (2) aux parois latérales (7) des conduits de courant (3), et les conduits d'écoulement (8) étant formés par l'arrondissage et/ou pliage des crêtes et des creux polygonaux des plaques (2) contiguës.

14. Séparateur de gouttes selon la revendication 13, caractérisé en ce que des plaques de renforcement (21) sont intégrées dans les blocs (20) à des intervalles prédéterminés afin d'assurer la rigidité de la construction.

15. Séparateur de gouttes selon la revendication 14, caractérisé en ce que deux à cinq plaques de renforcement (21) par mètre sont intégrées dans les blocs (20).

16. Séparateur de gouttes selon la revendication 14 ou 15, caractérisé en ce que la taille de la plaque de renforcement (21) est supérieure à celle des autres plaques (2) constituant le bloc (20), la plaque de renforcement (21) étant montée au bloc (20) de façon à dépasser vers le bas le plan inférieur (24) du bloc (20), et en ce que des échancrures (25) sont formées aux extrémités de la plaque de renforcement (21) pour soutenir le bloc (20) sur les tuyaux distributeurs d'eau (23) et fixer sa position.

17. Séparateur de gouttes selon la revendication 16, caractérisé en ce que des poids de charge (26) sont associés aux blocs (20) pour faciliter la fixation des derniers et pour fermer la fente entre eux.

18. Séparateur de gouttes selon la revendication 14 ou 15, caractérisé en ce que les plaques terminales (22) montées aux extrémités des blocs (20) sont dimensionnées plus grandes que les autres plaques (2) établissant chaque bloc (20), et sont montées au bloc (20) de façon à dépasser vers le haut le plan supérieur (27) du bloc (20), la partie dépassante (28) de chaque plaque terminale (22) étant repliée de manière à fermer la fente causée par le montage entre les tuyaux distributeurs d'eau (23).

19. Séparateur de gouttes selon la revendication 14 ou 15, caractérisé en ce que les extrémités du bloc (20) comprennent des encoches (29) pour soutenir le bloc (20) et fixer sa position sur les tuyaux distributeurs d'eau (23).
